# EUROPEAN PATENT APPLICATION

(11) **EP 3 908 031 A1**
(43) Date of publication of application: **10.11.2021**
(21) Application number: 20173638.6
(22) Date of filing: 08.05.2020
(51) Int. Cl.: H04W 24/04, H04W 36/38, H04W 24/02, H04L 12/24

(54) **GROUP-BASED-SOFTWARE OR HARDWARE UPGRADING OF WIRELESS NETWORK COMPONENTS**

(71) Applicant: Deutsche Telekom AG, 53113 Bonn (DE)
(72) Inventor: KALUZA, Jens, 53117 Bonn (DE)
(74) Representative: Braun-Dullaeus Pannen Emmerling Patent- & Rechtsanwaltspartnerschaft mbB

(57) **Abstract**

The invention relates to techniques of upgrading wireless network access units of a network, wherein the wireless network access units are connected to an operating unit of the network via a communication link, the method comprises the following steps carried out by the operating unit:
- Identifying a first group of wireless network access units based on a network coverage table, wherein each wireless network access unit within the first group shows an overlapping network coverage area with another wireless network access unit;
- Selecting a first wireless network access unit of the first group for an upgrade process;
- Outsourcing user equipment wirelessly connected to the first wireless network access unit to a second wireless network access unit of the first group, wherein the first wireless network access unit and the second wireless network access unit show a common overlapping network coverage area;
- Triggering the upgrade process of the first wireless network access unit.

## Description

This invention pertains to telecommunications, and particularly to an upgrade (e.g., update or replacement) method of wireless network access units of a radio access network (RAN) and to an operating unit which triggers the upgrade.

In a typical cellular radio system, mobile terminals (also known as mobile stations and mobile user equipment units (UEs)) communicate via a radio access network (RAN) to operators of networks to transport user traffic.

The user equipment units (UEs) can be mobile stations such as mobile telephones ("cellular" telephones), laptops with mobile termination and/or loT Devices, and thus can be, for example, portable, pocket, hand-held, computer-included, or car-mounted mobile devices which communicate voice and/or data with radio access network.

The radio access network (RAN) covers a geographical area which is divided into cell areas, with each cell area being served by a wireless network access unit which enables the UE to establish a wireless connection with the network, the wireless network access units are also known as base stations (BTS), e.g., a radio base station (RBS), which in some networks is also called "NodeB" or eNodeB". In the case of public wireless scenarios, e.g. at an airport, the wireless network access units can be W-LAN access points or the like. A cell is a geographical area where radio coverage is provided by wireless network access unit. To enhance performance of the wireless network, the wireless network access units show overlapping geographical areas to which they provide radio access.

Components in a RAN are managed directly with a RAN element manager system (EMS) which is connected to the operators OSS (operating support systems, https://en.wikipedia.org/wiki/Operations_support_system).

The wireless network access units regularly require software upgrades done by the mobile network operator. These software upgrades are done in regular time intervals, e.g. multiple times a year, to introduce new functionality and/or to patch security vulnerabilities in the operator's network. They usually require a restart of the related wireless network access unit, in particular the related base station (BTS), and cause service outages of all the UEs connected to this base station during the upgrade process. Due to the largely distributed RANs with thousands of individual base stations to be upgraded, it is not cost efficient to provide redundancy mechanisms for each of the BTS, e.g. an additional redundancy BTS that is associated with each BTS, that can take over the wireless communication to the network by the BTS are upgraded. Since in today's Single RAN deployments all radio access technologies (RAT) as UMTS, 3G, LTE, and/or 5G share central processing and transport components, they all suffer the same restart procedure which lead to the effect that all radio access technologies implemented on the BTS have service outages during the upgrade process. Typically, the service outage of the UEs due to the upgrade process of the BTS is about 5-10 minutes.

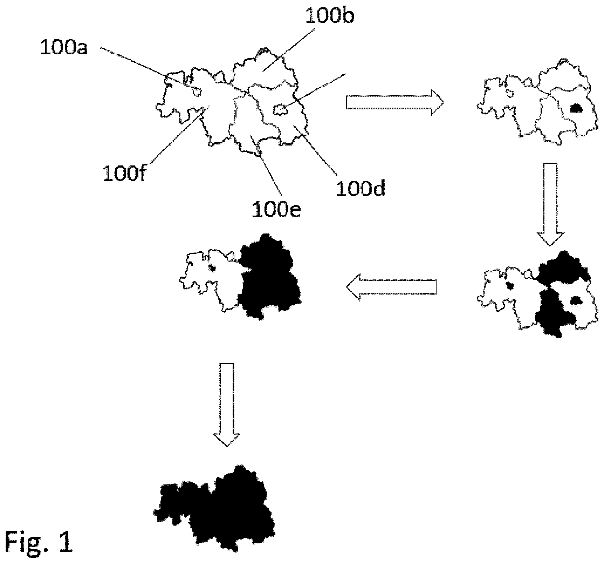

In any case, today's practice is to upgrade complete regions at the same time and thus all UEs in the area are affected as figure 1 shows. The downside is that UEs within the network coverage area of the regions suffer from service outages during the update process.

A known solution to limit the customer's impact, these upgrades are carried out in low traffic times and require nightshifts. However, with an increasing number of loT devices those low traffic times are hard to identify or nor existent at all since machine-to-machine (m2m) communication does not follow the same rules as traditional mobile communication.

EP 2 208 135 describes a cluster-based, delegated software upgrade scheme for radio base station nodes comprising a cluster of a flat radio access telecommunications network, wherein the radio base stations are grouped into clusters and a master radio base station is designated for each cluster, wherein the master radio base station initiates the software upgrade of the radio base stations comprising the cluster. However, this teaching does not solve the problem that UEs within the net coverage area of the cluster suffer from service outages during the update process.

It is the objection of the invention to provide a technical solution to prevent service outages of user equipment during the upgrade process of wireless network access units.

This task is solved with the features of independent claims.

The features of the various aspects of the invention described below or the various examples of implementation may be combined with each other, unless this is explicitly excluded or is technically imperative.

The RAN networks according to the invention can be 3G, LTE and/or 5G telecommunication networks. Furthermore, the invention can also be applied to W-LAN networks or any other mobile communication network.

According to a first aspect of the invention, a method of upgrading wireless network access units of a network is provided, wherein the wireless network access units are connected for management to an operating unit of the network, in particular to an operating unit of the of the OSS, via a communication link, the method comprises the following steps carried out by the operating unit:
- Identifying a first group of wireless network access units based on a network coverage table, wherein each wireless network access unit within the first group of wireless network access units shows an overlapping network coverage area with at least another wireless network access unit within the first group of wireless network access units. This basically means, that each wireless network access unit has within its network coverage area regions where a user equipment is able to connect to the network by using the other wireless network access unit. These overlapping regions can be smaller or be as big as the network coverage area of the wireless network access unit. Especially in urban and suburban regions, the overlap can be up to 70%. Preferably, the network coverage table is designed to be a network coverage map, wherein the network coverage map indicates a network coverage overlap of the network access units. Each wireless network access unit provides network access for user equipment within a certain geographical area. Especially neighboring wireless network access units show regions in which the user equipment is able to get access to the network by multiple wireless network access units. This is called a network coverage overlap;

- Selecting a first wireless network access unit of the first group of wireless network access units for an upgrade process. This selection can be performed randomly or in according to a defined processing plan;
- Outsourcing user equipment wirelessly connected to the first wireless network access unit to a second wireless network access unit of the first group of wireless network access units, wherein the first wireless network access unit and the second wireless network access unit show a common overlapping network coverage area. In other words, the user equipment or multiple user equipments connected to the first wireless network access unit offload/shift their data traffic to the second wireless network access and communicate via that second wireless network access unit with the network. This hand-over in process is preferably done in a smooth way so that the user is not experiencing any service outages of his user equipment;
- Triggering the software upgrade process of the first wireless network access unit. The upgrade process can be triggered by sending an upgrade signal via the communication link. Or performing a hardware upgrade process by replacing the first wireless network access unit or hardware components of the first wireless network access unit.

Hence, this method provides the advantage that software or hardware upgrade processes of wireless network access units like BTS or W-LAN routers at public places can be performed without any service outages of user equipment if there is sufficient coverage overlap. Before the upgrade process of the first wireless network access unit is triggered/started, the data traffic of the user equipment is shifted to the second wireless network access unit whose upgrade process is planned at a later point in time well after the first wireless network access unit has finished its upgrade process. If the second wireless network access unit is to be upgraded, the data traffic of the second wireless network access unit can be shifted to the upgraded first wireless network access unit or even to another wireless network access unit that might show even more network coverage overlap. A further advantage is, that conventional BTS and/or W-LAN routers do not need any technical adaption to be upgraded by this method. Ideally, the upgrade process run in a fully automatized fashion on the operating unit.

Preferably a processing plan is created that defines the order of the upgrade process of the wireless network access units of the first group and that the selection is based on the processing plan.

In contrast to a random selection of the upgrade order, this provides the advantage that additional circumstances/parameters can be considered when selecting the order of upgrade of the wireless network access units. The processing plan can be calculated on criteria like the current traffic at the time of the selection or on the basis of expected data traffic of the wireless network access units of the first group. It would be beneficial to arrange the order of the wireless network access units that shall be upgraded at a certain time point so that the data traffic of the respective wireless network access unit is minimal at the time point of the upgrade process. To judge those circumstances, the operating unit can evaluate past traffic data of all the wireless network access units of the first group. The method steps can be repeated until all wireless network access units of the first group are upgraded.

In an embodiment, multiple wireless network access unit are selected for a simultaneous upgrade process. To enable the simultaneous upgrade process, the upgrade signal is sent to the multiple wireless network access units almost at the same time.

This provides the advantage that the whole upgrade process of the group can be finished in a shorter time duration. This can be especially important, if the upgrade serves to page security issues. Of course, it is not possible to select all of the wireless network access units of the first group for simultaneous. For each of selected wireless network access unit there needs to be another wireless network access unit to which the respective data traffic is shifted. On the other hand, it might be possible, that one wireless network access unit is able to handle the data traffic of more than one wireless network access unit.

In a practical way the multiple wireless network access units each show a different network coverage area. This is basically means that none of the multiple wireless network access units has an overlapping network are with any one of the other multiple wireless network access units.

This provides the advantage that the multiple wireless network access units. Do not influence each other during the upgrade process.

In an embodiment, multiple group of wireless network access units are identified. This provides the advantage, that the method can deal with geographical arrangements of the wireless network access units in which there are areas that do not have overlapping or do not have any network coverage at all. None of the wireless network access units of one group has an overlapping network coverage area with any of the wireless network access units of any of the other groups.

These multiple groups of wireless network access units can be upgraded simultaneously or one after another. Upgrading the groups simultaneously has the advantage that the overall upgrade process is finished in a shorter time period. On the other side, upgrading one group after another has the advantage that a network operator can observe if the upgrade process goes as expected or shows some malfunctioning behavior. In the case of malfunctioning behavior only the current group that is upgraded is concerned. The network operator might then be able to stop the upgrade process for the other groups and to fix issues of the upgrade process. Furthermore, when upgrading one group after another, the network operator can take data traffic times into account. This can play a role in large countries with different time zones.

In an embodiment, the creation of the network coverage map is based on the geographical distribution and/or the technical specifications of the wireless network access units. This information can be stored in a memory of the operating unit and/or the operating unit request this information from the operator of the network. Regularly updating the geographical distribution and/or the technical specifications of the wireless network access units is advantageous to calculate a precise network coverage map.

The information about the geographic distribution and-or the technical specifications of the wireless network access units provides the advantage that it is known where a certain wireless network access unit is located and how far its network coverage area reaches. Hence, a detailed network coverage map can be calculated.

Preferably the outsourcing of the user equipment is performed by locking a cell of the first wireless network access unit and/or decreasing the signal level of the first wireless network access unit.

This provides the advantage, that these are circumstances in which a conventional user equipment, e.g. a mobile phone, already changes to another wireless network access unit. Hence, the outsourcing can be performed without the need to adapt mobile phones to the inventive method. The mobile phone detects by itself that another wireless network access unit shows a better signal level and automatically changes to this other cell. This corresponds to the situation in which a user moves with his mobile phone from one cell to another.

In an embodiment, the first wireless network access unit sends a message to the operating unit after successful upgrade. This informs the operating unit that the upgrade process has been successfully completed. As a consequence, the operating unit can re-integrate the upgraded wireless network access unit into the RAN.

The re-integration of the wireless network access unit into the RAN is done by the operating unit reversing at least some of the measures performed to outsource the user equipment form the first wireless network access unit. For example, the cell of the first wireless network access unit is unlocked and/or the signal level of the first wireless network access unit is increased. With these measures, a conventional user equipment, e. g. a mobile phone, can easily change back to the upgraded first wireless network access without any technical adaptation to the inventive method.

According to a second aspect of the invention, an operating unit of a network is provided to control an upgrade process of wireless network access units configured to execute the method described above, wherein the operating unit comprises:
a communication interface configured to establish a communication link with the wireless network access units and/or a network;
a computing unit configured to execute the method described above.

Hence, this provides the advantage that implementing an appropriate algorithm on the computing unit of the operating unit is sufficient to implement the inventive method. Conventional user equipment and/or conventional BTS can be used along with the operating unit according to the invention. This provides a very cost efficient way to facilitate the upgrade processes of wireless network access units without any service outages of the user equipment.

In an embodiment, a distribution and/or the technical specification of the wireless network access units is stored in a memory of the computing unit and/or the distribution and/or the technical specifications of the wireless network access units is accessed via the communication link from the network.

In an embodiment, the operating unit is configured to send an outsourcing-command to the wireless network access units via the communication link. This provides the advantage, that the wireless network access unit can shrink its cell signal level in order to force the user equipment to change to another cell.

According to a third aspect of the invention computer program product is provided, wherein the computer program product comprises instructions which, when the program is executed by a computer, cause the computer to carry out the steps of the method described above.

In the following, preferred implementation examples of the present invention are explained with reference to the accompanying figures:
- Fig. 1:: shows a conventional upgrade process of wireless network access units as it is done in today's practice.
- Fig. 2:: shows the upgrade process of wireless network access units according to the invention.
- Fig. 3: shows a flow diagram of the upgrade process of wireless network access units according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Fig. 1 shows multiple geographical areas 100a-f, wherein each of the geographical areas 100a-f shows a radio access network (RAN) with up to thousands of base stations (BTS). In each of the geographical areas 100a-f user equipment can connect with the BTS and get access to a network to transfer data for further processing. The BTS undergo regular updated processes that lead to outrages of the user equipment (UE). In order to limit the customer impact, who uses the UE, these upgrades are carried out in low traffic times. To limit the risks of software upgrades in Radio Access Networks, these upgrades are executed by separated activities (Pilot Upgrade, Upgrade Extension(s), Full Upgrade and not as all in one. The whole procedure is spread over several weeks and depends on the dimension of the base station.

It is common practice to upgrade the individual geographical regions 100a-f in succession. The colour code in Fig. 1 is as follows: geographical regions indicated in white colour have not yet received an upgrade and geographical regions that have already been upgraded our coloured in black.

As Fig. 1 shows, the upgrade process starts the geographical region 100d by triggering the upgrade process in all BTS that build up the RAN network in the geographical region 100d. As a next step, the geographical regions 100b, d are upgraded, then 100f and finally 100a. In any case, due to the upgrade of there are complete regions at the same time all UEs in the area are affected.

However, with an increasing number of loT devices those low traffic times are harder to identify since m2m communication does not follow the same rules as traditional mobile communication.

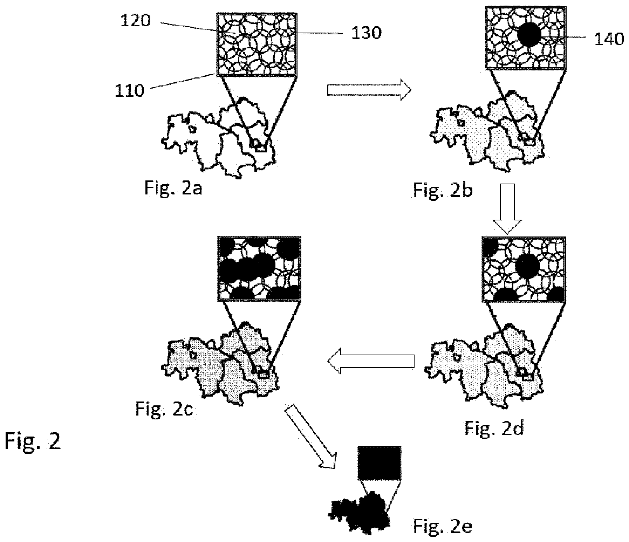

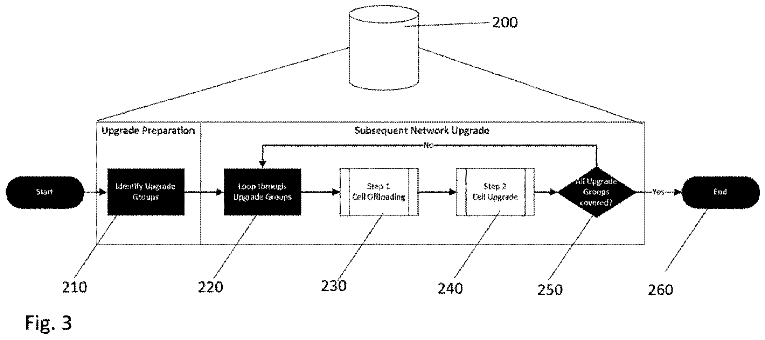

Fig. 2 and Fig. 3 illustrate the inventive approach to overcome outages of UEs. Fig. 2 shows the same geographical regions 100 as a Fig. 1. In addition, Fig. 2 shows an enlarged view 110 of the geographical regions 100. This enlarged view 110 illustrates the radio coverage areas 120 of each of the base stations, a radio coverage area 120 is also referred to as a cell 120. It can be seen that there is an overlap 130 of the radio coverage areas of the individual base stations.

The solution is based on the idea that the radio coverage of neighbored BTSs overlaps. Especially in urban and suburban deployments the overlap 130 can be up to 70%. From a customer or UE's perspective that means that usually not only one but multiple BTSs are existing which provide service and enable a communication to the network.

A huge coverage overlap 130 is reality today. It is a consciously planned situation which improves the RAN in terms of capacity and mobility reasons. Detailed information about the coverage situation is available at the radio planning department of a network operator.

A second contributor to the idea of inventive method is the fact that within physical boundaries the network operator can steer the traffic in a RAN. In particular, UEs can be forced to leave a certain cell 120 that is spanned by a BTS and attach to a neighbouring cell 120 spanned by another BTS. This process can be referred to as outsourcing or offloading the UE. The automatized software upgrade is performed with UE outsourcing/offloading techniques

The network operator plans carrying out a RAN software upgrade, in particular a upgrade of the base stations. For the individual base stations certain preparation steps have been done and the BTSs are awaiting the restart command.

The method of the software upgrade according to the invention is based on detailed knowledge of the overlap 130 situation of the cells 120.

An algorithm that can run on an operating unit 200 - see Fig. 3 - of the network provider identifies as a first step 210 BTS with overlapping cells 120 and without overlapping cells 120. Regions with cells 120 that overlap 130 at least with another are clustered in groups (A, B, C, D, ...). Hence, the groups A and B have no overlap 130 at all. In Germany, the number of these groups is expected to be less than ten.

A group upgrade follows as the second step 220. For example, the group upgrade starts with group A. Then the operating unit 200 selects the BTSs of group A that shall be updated and steers the data traffic from those selected BTSs to non-selected BTSs of group A, which is called the outsourcing process 230 or offloading process 230. In an embodiment, it is also possible that the outsourcing process is triggered by the selected BTS itself. Then the upgrade process 240 of each selected BTS is triggered. The BTSs are restarted to finalize the software upgrade and a check is performed if the software upgrade is successfully completed and if full-service is provided again. This check can be performed by the BTS itself or by the operating unit 200 or in a combination of the two units. Fig. 2b shows the effect of the upgrade process, namely that the selected 140 BTS of group A are updated while the non-selected BTS of group A have not been updated yet but that these non-selected BTS were able to provide full-service in the meantime of the upgrade process. This process is repeated until more and more BTS receive the upgrade, which is shown in Fig. 2c-2d. Fig. 2e illustrates the case when all BTS of group A have been upgraded. Of course it is possible, that the data traffic can also be outsourced to the already upgraded BTS units. The individual groups A, B, C, ... can be updated simultaneously as shown in Fig. 2 or one after another like indicated in the conditional branch 250. After all BTSs in all groups have been upgraded the method is ended 260.

The effect the method is that customers /UEs which are located in an overlapping area would only experience minor impact since their service is handed over to a second BTS during the restart. Up to date, these UEs cannot use mobile connections at this time in the conventional procedure.

In the following, it will be described in more detail how the upgrade groups can be identified and how outsourcing process can be realized.

### Identifying upgrade groups:

Base stations which do not have overlapping cells ('non overlapping sites') can be identified and can be upgraded simultaneously. They will be classified in same groups depending on their overlap, location, technology, and other parameters. The following information - which is available to the network operator - can be used alone or in any combination as input parameters of the algorithm running on the operating unit 200 for the identification and grouping process 210:
- Network Planning Tools: These are tools the network operator uses to plan his RAN. These tools can include maps with information about the geographical location of the network access units, in particular the BTS, and with information about the technical specification of each of the network access units so that they are cell area in their data traffic capacity can be calculated and mapped. These network planning tools provide detailed network planning information for which can be deduced if the cells of two different network access units overlap.
- In the case of a GSM network, the algorithm can use the current BCCH plan as a basis for cells which are not connected. The BCCH is the base station number. It is agreed that adjacent BTSs cannot have the same BCCH number.
- In the case of a LTE/NR network: Use LTE-PCI (Physical Cell Identifiers) as indicator for cells which are not connected or use x2 neighbor information describing neighbored cells, wherein x2 means a straight line between two BTSs.
- Feedback information of previous upgrade process: This feedback information can yield information like which BTS was able to cope with the outsourced data traffic from another BTS. If an BTS was not able to cope with the additional data traffic, the algorithm can decide based on the feedback information to steer the data traffic to a further BTS or to steer the data traffic to more than one other BTS.
- Active probing: The network operator can perform active probes of the "real" cell coverage of the BTSs (compared to the planned radio characteristics).
- Information obtained from the user equipment: The user equipment stores information about the signal strength of individual BTS at certain geographical locations. If it is in accordance with the local data protection law, this information can also be used to get a detailed insight into the properties of the RAN.

This identification process 210 of upgrade groups (clustering) shall be done highly automated without manual intervention (< 6hours) before conducting the subsequent network upgrade. Although this grouping is expected to be rather stable and will not change in minutes or hours. It shall reflect as good as possible the situation in live network for the time of the following software upgrade. Therefore, it is beneficial to perform this identification process 210 before each upgrade process based on updated information parameters.

The following steps of cell outsourcing/offloading and upgrading are done for all update groups A, B, C, D ... :
The cell outsourcing/offloading within the update groups A, B,C, D ... is done to hand over UEs to neighbored BTS with overlapping network coverage 130 for the time of the service outage due to restart the serving BTS in a conventional procedure. UEs which do not carry service do not need to be offloaded. Cell offloading is preferably done in an automated way and shall take less than 15 Minutes. Cell offloading can be carried out through external interfaces (mml/REST Northbound Interface) on the RAN Element Manager as the operating unit. It is also possible to allocate the operating unit to a higher hierarchy level than RAN Element Manager. - which basically means closer to the network.

Depending on Radio Access Technology (RAT) and RAN Vendor the possibilities for cell outsourcing/offloading are different, but they are existing in any case. Examples for offloading procedures are:
- Locking the cell for new call setup by the operating unit. This has the effect that the number of UEs connected to that cell is declining steadily.
- Shrinking the cell signal level of the selected BTS. This is a situation which mobile UEs are familiar with, when they move from one cell to another. The consequence is, that the UEs automatically decide for themselves to switch smoothly to the BTS with the highest cell signal level.
- Dedicated steering of the calls (depending on RAT). Triggering artificial handover. (Network initiated Handover and/or other options...)
- Using RAN Vendor depending operational functions. Some vendors provide the function of a "graceful" shutdown'

The next step is Steering the Upgrade within one of the groups A, B, C, D ....

The network access unit - e.g. the BTS or W-LAN - site upgrade can be triggered through external interfaces (mml /REST Northbound Interface) on the operating unit, in particular the RAN Element Manager. It shall take effect on the network elements in the current update group. The upgrade can be triggered by upgrade scripts implemented on the operating unit or the upgrade can be triggered upgrade trough external interface to the operating unit.

The basic upgrade process of the BTS differs only marginally from a conventional upgrade process. Therefore, the BTS need in principle no adaption to the inventive method.

Once the upgrade is finished, the process can continue with the next upgrade group until all upgrade are covered. Once this has been done for all update groups the Update is finished and appropriate upgrade post checks are performed.

## Claims

1. A method of upgrading wireless network access units of a network, wherein the wireless network access units are connected to an operating unit (200) of the network via a communication link, the method comprises the following steps carried out by the operating unit (200):
- Creating a network coverage map, wherein the network coverage map indicates a network coverage overlap (130) of the wireless network access units;
- Identifying a first group of wireless network access units based on a network coverage table, wherein each wireless network access unit within the first group shows an overlapping network coverage area with another wireless network access unit;
- Selecting a first wireless network access unit of the first group for an upgrade process;
- Outsourcing user equipment wirelessly connected to the first wireless network access unit to a second wireless network access unit of the first group, wherein the first wireless network access unit and the second wireless network access unit show a common overlapping network coverage area;
- Triggering the upgrade process of the first wireless network access unit or performing the upgrade process by replacing the first wireless network access unit or hardware components of the first wireless network access unit.

2. The method of claim 1, wherein a processing plan is created that defines the order of the upgrade process of the wireless network access units and that the selection is based on the processing plan.

3. The method of claim 2, wherein the processing plan takes the data traffic times of the wireless network access unit into account.

4. The method of any of the preceding claims, wherein multiple wireless network access unit are selected for a simultaneous upgrade process.

5. The method of claim 4, wherein the multiple wireless network access units each show a different network coverage area.

6. The method of any of the preceding claims, wherein multiple group of wireless network access units are identified.

7. The method of claim 6, wherein the multiple groups of wireless network access units are upgraded simultaneously or one after another.

8. The method of any of the preceding claims, wherein a creation of the network coverage table is based on the geographical distribution and/or the technical specifications of the wireless network access units.

9. The method of any of the preceding claims, wherein the outsourcing of user equipment is performed by locking a cell of the first wireless network access unit and/or decreasing the signal level of the first wireless network access unit.

10. The method of any of the preceding claims, wherein the first wireless network access unit sends a message to the operating unit after successful upgrade.

11. The method of claim 11, wherein the operating unit (200) reverses at least some of the measures performed to outsource the user equipment form the first wireless network access unit after receiving the message.

12. An operating unit of a wireless communication network to control an upgrade process of wireless network access units configured to execute the method of any of the claims 1-11, wherein the operating unit (200) comprises:
a communication interface configured to establish a communication link with the wireless network access units and/or a network;
a computing unit configured to execute the method of any of the claims 1-11.

13. The operating unit of claim 12, wherein a distribution of the wireless network access units is stored in a memory of the computing unit and/or wherein the distribution of the wireless network access units is accessed via the communication link from the core network.

14. The operating unit of any of the claims 12 to 13, wherein the operating unit is configured to send an outsourcing-command to the wireless network access units via the communication link.

15. A computer program product comprising instructions which, when the program is executed by a computer, cause the computer to carry out the steps of the method of claim 1 to 11.
